(19) Europäisches Patentamt
European Patent Office
Office européen des brevets

(11) **EP 2 626 204 B1**

(12) # EUROPÄISCHE PATENTSCHRIFT

(45) Veröffentlichungstag und Bekanntmachung des Hinweises auf die Patenterteilung:
**29.04.2015 Patentblatt 2015/18**

(51) Int Cl.:
**B32B 27/36** *(2006.01)*

(21) Anmeldenummer: **13000390.8**

(22) Anmeldetag: **28.01.2013**

(54) **Coextrudierte, biaxial orientierte Polyesterfolie mit Oligomerenbarriere**

Co-extruded biaxial oriented polyester film with oligomeric barrier

Feuille de polyester coextrudée à orientation biaxiale avec barrières d'oligomères

(84) Benannte Vertragsstaaten:
**DE FR GB IT LU TR**

(30) Priorität: **08.02.2012 DE 102012002448**

(43) Veröffentlichungstag der Anmeldung:
**14.08.2013 Patentblatt 2013/33**

(73) Patentinhaber: **Mitsubishi Polyester Film GmbH**
**65203 Wiesbaden (DE)**

(72) Erfinder:
• **Kolar, Petr**
**65760 Eschborn (DE)**
• **Kliesch, Holger**
**65462 Ginsheim-Gustavsburg (DE)**

• **Bothe, Lothar**
**55124 Mainz (DE)**
• **Klein, Oliver**
**55437 Ockenheim (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A1- 2 163 382     JP-A- 2011 167 909**
**US-A1- 2006 210 768     US-B1- 6 670 110**

EP 2 626 204 B1

**Beschreibung**

Die Erfindung betrifft eine coextrudierte, biaxial orientierte Polyesterfolie mit einer Basisschicht (B) aus einem Polyester, der zum überwiegenden Anteil aus Polyethylenterephthalat (im Folgenden PET) besteht, und mindestens einer auf die Basisschicht mittels Coextrusion aufgebrachten Deckschicht (A), die eine Barrierewirkung gegen das Auswandern von zyklischen Ethylenterephthalatoligomeren aus der Basisschicht auf die Oberfläche entfaltet, sowie ein Verfahren zu ihrer Herstellung und ihre Verwendung.

Stand der Technik

Biaxial orientierte Polyesterfolien, umfassend coextrudierte, biaxial orientierte Polyesterfolien sind seit langem bekannt. Auf Grund ihrer guten Eigenschaften finden Polyesterfolien eine Vielzahl von Anwendungen. Die Herstellung und Verwendung von biaxial orientierten Polyesterfolien wird beispielsweise ausführlich in Encyclopedia of Polymer Science and Engineering, Volume 12, Second Edition, 1988, auf Seiten 193 bis 216 und PET Packaging Technology, edited by David W. Brooks and Geoff A. Giles, Sheffield Academic Press 2002 (ISBN 0-8493-9786-3) auf Seiten 116 bis 157 dargestellt.

Bei der Polykondensation von Ethylenterephthalat-basierenden Polyestern werden immer zyklische Ethylenterephthalatoligomere, insbesondere zyklische Ethylenterephthalattrimere, gebildet. Der Gesamtgehalt der Oligomeren liegt gewöhnlich im Bereich von 1 bis 2 Gew.-%. Das zyklische Ethylenterephthalattrimere stellt mit 60 bis 80 Gew.-% an der Gesamtmenge der gebildeten zyklischen Oligomeren die Hauptmenge dar. Die zyklischen Oligomere bereiten bei der Herstellung, der Verarbeitung des Polyesters und bei der Verarbeitung der hergestellten Artikel bei höheren Temperaturen Probleme. Vornehmlich das zyklische Ethylenterephthalattrimere migiriert an die Oberfläche (siehe hierzu beispielsweise J.-M. Besnoin und K.Y. Choi in Rev. Macromol. Chem.Phys., C29(1), 67 - 68 (1989), oder D. Briggs, Analysis of polymer surfaces by SIMS VI. Detection of cyclic oligomer on the surface of poly(ethylene terephthalate) film in Surface and Interface Analysis, Vol. 8, 133 - 136 (1986)). H. Zeitler führt in Melliand Textilber. 2/1985, 132 -138, aus, dass Oligomere bei der Weiterverarbeiung mobilisiert werden und sich an der Oberfläche abscheiden und zu Problemen führen. Nach Zeitler bestehen die Oberflächenoligomere bei PET weit überwiegend aus den cyclischen Trimeren.

Bei der Verarbeitung des Polyesters zu biaxial orientierten Folien verschmutzen die aus der Folie auswandernden zyklischen Oligomere die Folienanlage, was Maschinenstillstände zur Reinigung erforderlich macht, wodurch die Wirtschaftlichkeit der Folienherstellung verschlechtert wird. Wird die biaxial orientierte Polyesterfolie bei höheren Temperaturen verarbeitet bzw. verwendet, migrieren zyklische Oligomere an die Folienoberfläche und können vielfältige negative Effekte bewirken wie Verschlechterung des Erscheinungsbildes (Transparenz, Oberflächenglanz) oder bei Lebensmittelverpackungen eine unerwünschte Migration in das Lebensmittel oder in ein Kühlmittel, z. B. bei technischen Verpackungsanwendungen. Die Bildung von Ablagerungen aus zyklischen Ethylenterephthalatoligomeren, insbesondere partikelförmige Ablagerungen zyklischer Ethylenterephthalatoligomerer auf der Folienoberfläche, ist besonders unerwünscht bei Verwendung der PET-Folie in Bereichen mit hohen optischen Qualitätsansprüchen. S. Reichlmaier et al. weisen in J. Vac. Sci. Technol. A13(3), Mai/Juni 1995, S. 1217 - 1223, darauf hin, dass zyklische Trimere als kleine Partikel auf der Oberfläche der PET-Folie vorliegen und ein wesentliches Problem im Bereich der Anwendung als Magnetbandfolie darstellen, da sie als Quelle für Beschichtungsfehler in der Magnetbandbeschichtung dienen können. Weiterhin können die an die Folienoberfläche migrierenden und sich ablagernden zyklischen Oligomere z. B. bei der Herstellung von Folienlaminaten, insbesondere bei Kartenanwendungen, bei denen Folienlagen zwischen geheizten Metallplatten mit PET-Folie als oberster Lage verpresst werden, die Pressplatten verschmutzen, was zu Fehlern auf der Laminat- bzw. Kartenoberfläche führt, woraus letztlich eine erhöhte Aussortierung resultiert und was eine vermehrte Reinigung der Pressplatten notwendig macht.

Es wurden bereits viele Vorschläge gemacht, die oben genannten Probleme, die sich auf Grund des zyklischen Ethylenterephthalatoligomergehalts in PET-Rohstoffen bei biaxial orientierten PET-Folien ergeben, zu lösen.

Erste Vorschläge beschreiben spezielle Extraktionsverfahren zur Entfernung von zyklischen Oligomeren aus Polyesterfolien. So wird beispielsweise in den Japanischen Veröffentlichungen JP-43-23348 (1968), JP-44-2120 (1969) und JP-54-62277 (1979) vorgeschlagen, die zyklischen Oligomere aus der Polyesterfolie mittels erhitzter Lösungsmittel zu extrahieren, wobei in den beiden ersten Schriften Dimethylformamid und Benzylalkohol und in der dritten Schrift Xylol als Extraktionsmittel vorgeschlagen wird. Diese Extraktionsverfahren weisen aber den wesentlichen Nachteil auf, dass dort mit sehr kritischen Lösungsmitteln (giftig, gesundheitsschädlich, leicht entzündlich) gearbeitet werden muss. Dies erfordert einen hohen verfahrenstechnischen und apparativen Aufwand, insbesondere im Hinblick auf sicherheitstechnische Anforderungen, um die gegebene Gefährdung von Personal und Umwelt auszuschließen, sowie bezüglich der sicheren Entsorgung bzw. Aufarbeitung der Extrakte.

In US-A-6,020,056 wird vorgeschlagen, für die Herstellung der biaxial orientierten Polyesterfolien einen PET-Folienrohstoff mit möglichst niedrigem Gehalt an zyklischen Oligomeren (Trimeren) einzusetzen. Die Herstellung derartiger Rohstoffe ist allerdings sehr aufwändig und führt zu Rohstoffen mit sehr hoher Molmasse, die nur unter Schwierigkeiten zu Folien verarbeitet werden können. Weiterhin bilden sich bei der Verarbeitung des PET-Rohstoffs (Aufschmelzen und Extrusion bei hohen Temperaturen) erneut zyklische Oligomere.

Die Erfinder aus US-A-6,020,056 haben dies wohl auch erkannt und daher später in US-A-2009/0011228 vorgeschlagen, zur Verhinderung der Migration zyklischer Oligomere aus Polyesterfolien die Folien mit einer die Migration verhindernden In-line-Beschichtung (coating) zu versehen. Die Verhinderung der Auswanderung zyklischer Oligomere aus biaxial orientierten Polyesterfolien mittels einer In-line-Beschichtung wird beispielsweise auch in ähnlicher Weise in JP-A-2001/062960 und JP-A-2008/142960 vorgeschlagen. Diese Lösungsvorschläge zur Verhinderung der Oligomerenmigration mittels einer Beschichtung zeigen den Nachteil, dass ein Beschichtungsaggregat in die Folienproduktionsanlage integriert werden muss sowie Beschichtungslösungen oder Dispersionen gehandhabt werden müssen (erhöhter Aufwand). Weiterhin bewirken die vernetzten Beschichtungen in der Regel eine schlechte Regenerierbarkeit der Folie, und schließlich wird durch die Oligomer blockierende In-line-Beschichtung das Verschmutzungsproblem der Folienanlage im Bereich vor der In-line-Beschichtung nicht gelöst.

<u>Definition der Aufgabe</u>

Es stellt sich daher die Aufgabe, die beschriebenen Nachteile des Standes der Technik zu überwinden. Es soll eine biaxial orientierte Polyethylenterephthalatfolie bereitgestellt werden, bei deren Herstellung und Verwendung, insbesondere bei höheren Temperaturen, eine Migration von zyklischen Ethylenterephthalatoligomeren an die Folienoberfläche blockiert ist und so die Nachteile, die sich aus der Migration, Ausdampfung bzw. Ablagerung von zyklischen Ethylenterephthalatoligomeren an die bzw. auf der Folienoberfläche ergeben, vermieden werden.

<u>Lösung der Aufgabe</u>

Die Aufgabe wird gelöst durch die Bereitstellung einer coextrudierten, biaxial orientierten Polyesterfolie gemäß Anspruch 1 mit einer Basisschicht (B) aus einem Polyester, der zum überwiegenden Anteil aus Polyethylenterephthalat besteht, und mindestens einer auf die Basisschicht mittels Coextrusion aufgebrachten Deckschicht (A), die eine Barrierewirkung gegen das Auswandern von zyklischen Ethylenterephthalatoligomeren aus der Basisschicht auf die Oberfläche entfaltet, sowie ein Verfahren zu ihrer Herstellung und ihre Verwendung.

<u>Beschreibung der Erfindung</u>

Gegenstand der Erfindung ist demgemäß eine biaxial orientierte, coextrudierte Polyesterfolie, die mindestens zweischichtig ist und dadurch gekennzeichnet ist, dass sie eine Basisschicht (B) aus überwiegend Polyethylenterephthalat und mindestens eine Deckschicht (A) aufweist.

Die Deckschicht (A) ist aus einem Polyester aufgebaut, dessen Diolkomponente zu mindestens 80 Mol-%, bevorzugt mindestens 95 Mol-% und besonders bevorzugt zu mindestens 99 Mol-%, auf 1,4-Cyclohexandimethanol (CHDM) basiert (wobei die Gesamtmenge aller Diolkomponenten des Polyesters 100 Mol-% beträgt). CHDM kann sowohl als cis-CHDM, trans-CHDM oder als Mischung cis/trans CHDM vorliegen, insbesondere ist ein Molverhältnis cis/trans von 30/70 günstig. Unter "Diolkomponente" wird erfindungsgemäß die von einem Diol abgeleitete Struktur verstanden, die in die Polymerkette eingebaut ist (-O-X-O-); die abgeleitete Struktur trägt dabei den Namen der monomeren Verbindung, wobei der Name der monomeren Verbindung als solche hier gegebenenfalls auch alternativ und gleichwertig anstelle der Komponente verwendet wird. Je höher der Cyclohexandimethanolanteil an der Diolkomponente ist, umso besser ist die blockierende Wirkung gegen das Auswandern von zyklischen Ethylenterephthalattrimeren aus der Basisschicht.

Die Dicarbonsäurekomponente des Polyesters der Deckschicht (A) besteht aus Terephthalsäure und Isophthalsäure, wobei der Isophthalsäuregehalt im Bereich von 20 - 30 Mol-%, liegt (wobei die Gesamtmenge aller Dicarbonsäurekomponenten des Polyesters 100 Mol-% beträgt). Liegt der Gehalt an Isophthalsäure unterhalb von 5 Mol-%, ist die Oberflächenschicht zu spröde, und es ergeben sich Probleme bei der Herstellung der Folie, und die Deckschicht hat eine unbefriedigende Haftung zur Basisschicht. Liegt der Gehalt an Isophthalsäure oberhalb von 35 Mol-%, zeigt die Folienoberfläche unerwünschte Klebeneigungen an geheizten Walzen bei der Herstellung der Folie, und die Barrierewirkung gegen die Migration der Oligomeren ist unbefriedigend.

Die Standardviskosität des Polyesters der Deckschicht (A) liegt üblicherweise im Bereich von 800 bis 1100.

Der Polyester der Basisschicht (B) besteht zum überwiegenden Anteil, das heißt zu mindestens 80 Mol-% , bevorzugt mindestens 85 Mol-% , besonders bevorzugt zu mindestens 95 Mol-%, aus Ethylenterephthalat (wobei die Gesamtmenge aller Polyester der Basisschicht (B) 100 Mol-% beträgt). Der Polyester der Basisschicht kann auch weitere Copolymerkomponenten, das heißt Diol- und/oder Dicarbonsäurekomponenten enthalten. Die weitere(n) Dicarbonsäurekomponente(n) kann (können) beispielsweise von Isophthalsäure, Naphthalindicarbonsäure, aliphatischen oder cycloaliphatischen Dicarbonsäuren abgeleitet sein, wobei Isophthalsäure bevorzugt ist. Die weitere(n) Diolkomponente(n) kann (können) beispielsweise von aliphatischen Glykolen wie Diethylenglykol, Propandiol, Butandiol oder zyklischen Glykolen wie Cyclohexandimethanol abgeleitet sein, wobei Cyclohexandimethanol bevorzugt ist. Ein Gehalt an Isophthalsäure- und/oder Cyclohexandimethanolkomponenten im Polyester der Basisschicht bewirkt eine Verbesserung der Haftung zur Deckschicht (A).

Die Standardviskosität des Polyesters der Basisschicht (B) liegt üblicherweise im Bereich von 700 bis 1075.

Die Gesamtdicke der Folie ist nicht kritisch und liegt üblicherweise im Bereich von 10 bis 500 $\mu$m, wobei die Dicke der Deckschicht (A) bei 0,3 bis 10 $\mu$m, insbesondere 1 bis 8 $\mu$m, insbesondere bevorzugt bei 2 bis 6 $\mu$m, liegt. Liegt die Dicke der Deckschicht (A) unterhalb von 0,3 $\mu$m, so ist die Barrierewirkung gegen die Oligomermigration ungenügend. Dicken oberhalb von 10 $\mu$m bringen keine nennenswerte Verbesserung der Migrationsbarriere.

In einer besonderen Ausführungsform weist die Folie auf der der Deckschicht (A) entgegengesetzten Seite der Basisschicht (B) eine weitere Oberflächenschicht (C) auf, durch die der Folie eine weitere wünschenswerte Funktion verliehen werden kann. Die Folie weist dann eine so genannte ABC-Struktur auf.

Bei der Oberflächenschicht (C) handelt es sich um eine coextrudierte oder mittels In-line- oder Off-line-Beschichtung aufgebrachte Schicht. Bei coextrudierten Oberflächenschichten kann es sich beispielsweise um eine Siegelschicht auf Basis bekannter Copolyester, z. B. aus Ethylenterephthalat/Isophthalat, oder eine matte Polyesterdeckschicht handeln. Bei einer mittels Beschichtung aufgebrachten Deckschicht (C) kann es sich beispielsweise um bekannte haftvermittelnde Beschichtungen auf Basis von Acrylatcopolymeren oder Copolyesterpolymeren handeln.

In einer besonders bevorzugten Ausführungsform handelt es sich um eine dreischichtige Folie mit einer ABA-Struktur. Diese Ausführungsform ist besonders vorteilhaft, da in diesem Fall durch die sich auf beiden Seiten der Basisschicht (B) befindenden Deckschichten (A) die Migration der Oligomere zu beiden Folienoberflächen blockiert wird.

Zur Optimierung weiterer Folieneigenschaften können den Schichten der erfindungsgemäßen Folie die zur Modifizierung von biaxial orientierten Polyesterfolien üblichen Additive zugesetzt werden. Beispiele hierfür sind UV-Stabilisatoren, Flammschutzmittel oder Hydrolysestabilisatoren; zur Weißeinfärbung können übliche Weißpigmente wie $TiO_2$, $BaSO_4$ oder deren Mischungen insbesondere der Basisschicht (B) zugesetzt werden.

Um das Verarbeitungsverhalten der Folie zu verbessern, hat es sich besonders bewährt, mindestens eine außenliegende, coextrudierte Schicht mit Antiblockmitteln auszurüsten. Bei diesen Antiblockmitteln handelt es ich um die bekannten anorganischen Partikel, insbesondere amorphes $SiO_2$, beispielsweise mit einem mittleren Teilchendurchmesser $d_{50}$ von 0,5 bis 4 $\mu$m, welche in geringer Menge - üblicherweise 0,05 bis 0,25 Gew.-% (bezogen auf das Gewicht der jeweiligen partikelhaltigen Schicht) - zugesetzt werden, um die Wickelbarkeit und die Gleiteigenschaften der Polyesterfolie zu verbessern.

Verfahren zur Herstellung

Die Herstellung der erfindungsgemäßen Folie kann nach bekannten Verfahren erfolgen, wie sie beispielsweise ausführlich in

- Encyclopedia of Polymer Science and Engineering, Volume 12, Second Edition, 1988, z. B. Seiten 193 - 216, oder
- PET Packaging Technology, edited by David W. Brooks and Geoff A. Giles, Sheffield Academic Press 2002 (ISBN 0-8493-9786-3), z. B. Seiten 116 - 157,

beschrieben sind.

Bei dem Verfahren zur Herstellung der erfindungsgemäßen Folien wird zweckmäßigerweise so vorgegangen, dass die Rohstoffe der einzelnen Folienschichten in getrennten Extrudern aufgeschmolzen werden, durch eine Flachdüse coextrudiert werden, das so erhaltene Extrudat zur Verfestigung auf einer oder mehreren Walzen (Kühlwalzen) als weitgehend amorphe Vorfolie abgezogen und abgeschreckt wird, die Vorfolie anschließend erneut erhitzt und biaxial gesteckt (orientiert) wird, die biaxial orientierte Folie dann thermofixiert und die Folie schließlich zu einer Rolle aufgewickelt wird.

Die besten Eigenschaften hinsichtlich der Haftung der Schichten werden erreicht, wenn die Rohstoffe in Zweischneckenextrudern vom Entgasungstyp aufgeschmolzen werden. Werden Einschneckenextruder benutzt, sollten die Rohstoffe vor der Extrusion getrocknet werden.

Die Anlegung der extrudierten Schmelze erfolgt in der Regel unter Einsatz des bekannten elektrostatischen Anlegeverfahrens. Die biaxiale Verstreckung wird im Allgemeinen sequentiell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) verstreckt. Dies führt zu einer Orientierung der Molekülketten. Das Verstrecken in Längsrichtung lässt sich mit Hilfe zweier entsprechend dem angestrebten Streckverhältnis verschieden schnell laufender Walzen durchführen. Zum Querstrecken benutzt man üblicherweise einen so genannten Kluppenrahmen. In diesem Kluppenrahmen erfolgt auch die Thermofixierung.

Die Temperatur, bei der die Verstreckung durchgeführt wird, kann in einem relativ großen Bereich variieren und richtet sich nach den gewünschten mechanischen Eigenschaften der Folie. Im Allgemeinen wird die Längs- und auch die Querstreckung bei $T_G$-5 bis $T_G$+40 °C des Polyesters der A-Schicht, bevorzugt im Bereich $T_G$ bis $T_G$+25 °C durchgeführt ($T_G$ = Glastemperatur des Polyesters). Das Längsstreckverhältnis liegt allgemein im Bereich von 2 bis 5:1, vorzugsweise 2,5 bis 4,5:1, besonders bevorzugt 3 bis 4:1. Das Querstreckverhältnis liegt ebenfalls allgemein im Bereich von 2 bis 5:1, vorzugsweise 2,5 bis 4,5:1, besonders bevorzugt 3 bis 4:1.

Bei der nachfolgenden Thermofixierung wird die Folie etwa 0,1 bis 10 s lang bei einer Temperatur von 170 bis 255 °C, vorzugsweise 210 bis 250 °C und idealerweise 220 bis 240 °C, gehalten.

Die erfindungsgemäßen Folien eigenen sich für technische und Verpackungs-Anwendungen wie insbesondere Elektroisolierfolien, optische Verwendungen, Laminierfolien und Folienlaminate, insbesondere im Bereich von Kartenanwendungen, Verpackungsfolien, und insbesondere zur Verwendung in flexiblen elektronischen/optoelektronischen Geräten wie sie z. B. in DE 602 08 913 T2 beschrieben werden.

Prüfmethoden

**Standardviskosität SV**

Die Standardviskosität SV ist ein Maß für die Molmasse eines Polyesters. Die Standardviskosität SV wird - angelehnt an DIN 53726 - durch die Messung der relativen Viskosität $\eta_{rel}$ einer 1 Gew.-%igen Lösung in Dichloressigsäure (DCE) mit einem Ubbelohde Viskosimeter bei 25 °C gemessen. Aus der relativen Viskosität $\eta_{rel}$ wird der dimensionslose SV-Wert wie folgt berechnet:

$$SV = (\eta_{rel} - 1) \cdot 1000$$

Der SV-Wert kann bei Bedarf in eine Intrinsische Viskosität (IV-Wert) mittels der Gleichung

$$IV = SV \cdot 0{,}0006907 + 0{,}063096 \ [dl/g]$$

umgerechnet werden.

**$T_G$ (Glastemperatur)**

Die Glastemperatur $T_G$ wird mittels DSC-Messung mit dem Differential Scanning Calorimeter Pyris 1 DSC (Hersteller: Perkin Elmer, USA) bestimmt.

Ausgehend von einer Probeeinwaage von ca. 10 mg wird die Probe zunächst im DSC von 20 °C auf 300 °C aufgeheizt (1. Aufheizkurve) und bei 300 °C für 10 min gehalten. Die Probe wird dann mit einer eingestellten Abkühlgeschwindigkeit von 500 °C/min auf 20 °C abgeschreckt und dann 10 min bei 20 °C gehalten. Es erfolgt dann ein zweites Aufheizen (2. Aufheizkurve) mit einer Aufheizgeschwindigkeit von 20 °C/min. Der Glasübergang der Probe ist im DSC-Diagramm der 2. Aufheizkurve als so genannte Glasstufe zu erkennen. Die Messung wird unter einer Stickstoffüberlagerung bzw. Stickstoffspülung von 20 ml Stickstoff/min durchgeführt.

Die Glastemperatur wird nach folgender Gleichung errechnet:

$$T_G = (T_{GA} + T_{GE})/2$$

In dieser Gleichung sind $T_{GA}$ die extrapolierte Anfangstemperatur der Glasstufe, $T_{GE}$ die extrapolierte Endtemperatur der Glasstufe und $T_G$ die Glastemperatur.

**Rasterelektronenmikroskopie**

Die zu untersuchende Oberfläche der Folienprobe wird in einem Sputter Coater (SC7680, Fa. Polatron) mit einer 10 nm dicken Schicht von reinem Gold besputtert und in einem Rasterelektronenmikroskop mit SE Detektor (Supra 35VP, Fa. Zeiss) im Hochvakuum bei 500-facher Vergrößerung untersucht.

## Beurteilung der Migration der cyclischen Oligomeren

Folienproben mit den Maßen 10 x 10 cm werden zwischen zwei Platten aus hochglänzendem Edelstahl mit einer Dicke von 1 mm gelegt, in einen auf 170 °C aufgeheizten Ofen eingeführt und sofort mit Gewichten, die auf 170 °C aufgeheizt sind, beschwert. Der Anpressdruck beträgt 1 kg/cm². Die Proben werden 2 Stunden bei 170 °C im Ofen belassen. Nach der Behandlung werden die Oberflächen der Proben mittels Rasterelektronenmikroskopie (siehe oben) untersucht.

Migrierte cyclische Oligomere sind als Kristalle zu erkennen. Zur Absicherung werden die Oberflächen mittels Sekundärionen-Massenspektrometrie (SIMS) untersucht (Details s.: "Analysis of Polymer Surfaces by SIMS, 6-Detection of Cyclic Oligomer on the surface of Poly(ethylene-terephthalate) Film", Surface and Interface Analysis, Vol. 8, 133-136 (1986)). Der 577 dalton Peak im Positivionenspektrum entspricht dem quasi molekularen Ion des cyclischen Trimers. Aus dem Intensitätsverhältnis des 577 zu dem 104 (reines PET) dalton Peak lässt sich sogar auf die migrierte Menge an cyclischem Oligomer schließen.

Im Folgenden wird die Erfindung anhand von Beispielen näher erläutert.

## Verwendete Rohstoffe

RA = Polycyclohexandimethanol-terephthalat-isophthalat (PCTI), Typ DuraStar® Polymer DS2000 (Hersteller: Eastman, USA), SV-Wert = 980, Isophthalsäure-Gehalt 26 Mol-%, Terephthalsäure-Gehalt 74 Mol-%, $T_G$ = 88 °C

MB-RA = Masterbatch aus 99 Gew.-% DuraStar Polymer DS 2000 und 1 Gew.-% amorphem $SiO_2$ Typ Sylobloc 46 (Hersteller: Grace, Deutschland); mittlerer Teilchendurchmesser $d_{50}$ laut Datenblatt 2,9 - 3,5 $\mu$m

RB = Polyethylenterephthalat (PET), Typ PET 6020 (Hersteller: INVISTA Resins & Fibres GmbH, Deutschland), SV-Wert = 870; Ethylenterephthalatgehalt ca. 99 Mol-%

MB-RB = Masterbatch aus 99 Gew.-% PET 6020 und 1 Gew.-% amorphem $SiO_2$, Typ Sylobloc 46 (Hersteller: Grace, Deutschland); mittlerer Teilchendurchmesser $d_{50}$ laut Datenblatt 2,9 - 3,5 $\mu$m

## Beispiel 1

Es wurde eine coextrudierte, biaxial orientierte, dreischichtige Polyesterfolie mit ABA-Struktur hergestellt, wobei die Basisschicht (B) aus dem Rohstoff RB und die beiden Deckschichten aus einem Rohstoffgemisch aus 90 Gew.-% RA und 10 Gew.-% MB-RA bestanden.

Der Rohstoff RB der Basisschicht (B) wurde in einem Zweischneckenextruder mit Entgasung (Hauptextruder) aufgeschmolzen. Die Rohstoffmischung (RA und MB-RA) der Deckschichten (A) wurde jeweils in einem Zweischneckenextruder mit Entgasung (Coextruder) aufgeschmolzen. Die Schmelzeströme wurden durch eine Coextrusionsdüse extrudiert und auf einer Kühlwalze zu einer amorphen Folie verfestigt, danach über ein Rollenstreckwerk bei 110 °C und einem Streckverhältnis von 3:1 längsgestreckt, mittels eines Kluppenrahmens bei 110 °C und einem Querstreckverhältnis von 3,2:1 quergestreckt, bei 230 °C für 5 s thermofixiert und dann aufgerollt.

Die Gesamtfoliendicke der Endfolie betrug 50 $\mu$m, wobei die Basisschicht eine Dicke von 38 $\mu$m und die Deckschichten (A) eine Dicke von jeweils 6 $\mu$m aufwiesen. Der Anteil an $SiO_2$ Antiblockmittel (Sylobloc® 46) der Deckschichten betrug jeweils 0,1 Gew.-% (bezogen auf die jeweilige Deckschicht).

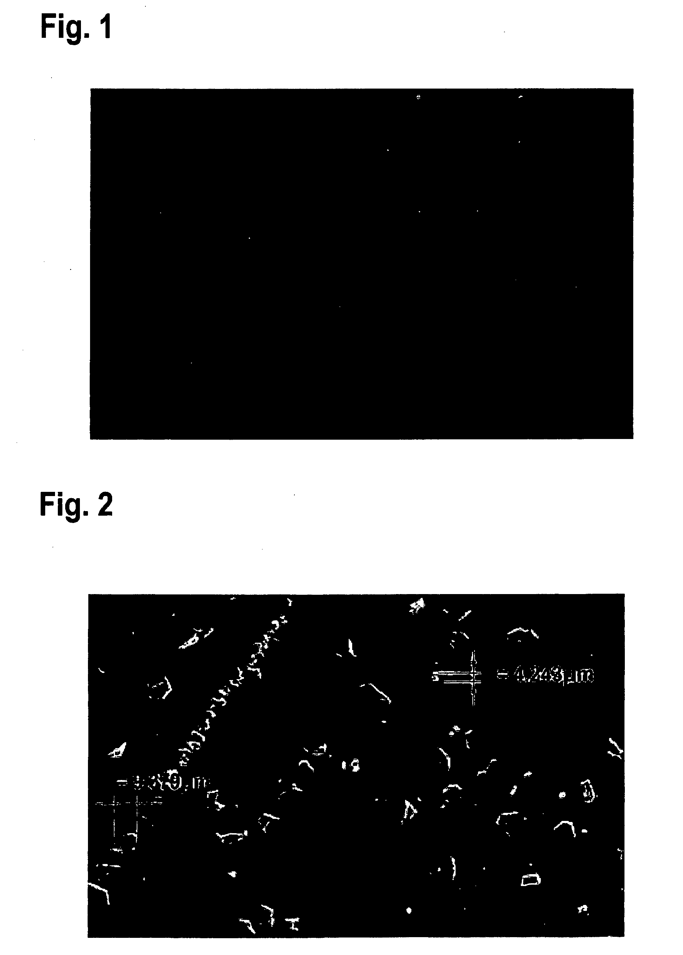

Auf den Oberflächen der Folie nach Behandlung im Ofen bei 170 °C waren keine cyclischen Oligomere zu erkennen (s. Figur 1).

## Vergleichsbeispiel 1

Beispiel 1 wurde wiederholt, wobei die Deckschichten (A), im Unterschied zum Beispiel 1, aus einem Rohstoffgemisch aus 99 Gew.-% RB und 1 Gew.-% MB-RB bestanden.

Die Oberfläche der Folie wies nach Behandlung im Ofen bei 170 °C eine hohe Anzahl an Kristallen mit den Größen einiger Mikrometer auf (s. Figur 2). Bei den Kristallen handelte es sich um das kristallisierte cyclische Ethylenterephthalat Oligomer (Trimer).

**Patentansprüche**

1. Coextrudierte, biaxial orientierte, mindestens zweischichtige Polyesterfolie, **dadurch gekennzeichnet, dass** sie

   - eine Basisschicht (B) aufweist, die aus einem Polyester aufgebaut ist, der zu mindestens 80 Mol-% aus Ethylenterephthalatkomponenten besteht (wobei die Gesamtmenge aller Esterkomponenten der Basisschicht (B) 100 Mol-% beträgt), und
   - mindestens eine Deckschicht (A) aufweist, die aus einem Polyester aufgebaut ist, dessen

      - Diolkomponente zu mindestens 80 Mol-% auf 1,4-Cyclohexandimethanol (CHDM) basiert (wobei die Gesamtmenge aller Diolkomponenten des Polyesters 100 Mol-% beträgt), und dessen
      - Dicarbonsäurekomponente aus Terephthalsäure und Isophthalsäure besteht, wobei der Isophthalsäuregehalt im Bereich von 20 bis 30 Mol-% liegt (wobei die Gesamtmenge aller Dicarbonsäurekomponenten des Polyesters 100 Mol-% beträgt).

2. Coextrudierte, biaxial orientierte Polyesterfolie nach Anspruch 1, **dadurch gekennzeichnet, dass** die Basisschicht (B) auf beiden Oberflächen mit einer Deckschicht (A) versehen ist (ABA-Struktur).

3. Coextrudierte, biaxial orientierte Polyesterfolie nach Anspruch 1 oder 2, **dadurch gekennzeichnet, dass** die Folie auf der der Deckschicht (A) entgegengesetzten Seite der Basisschicht (B) eine Oberflächenschicht (C) aufweist (ABC-Struktur).

4. Coextrudierte, biaxial orientierte Polyesterfolie nach einem der Ansprüche 1 bis 3, **dadurch gekennzeichnet, dass** die Dicke der Deckschicht(en) (A) oder/und (C) (jeweils) 0,3 bis 10 $\mu$m beträgt.

5. Coextrudierte, biaxial orientierte Polyesterfolie nach einem der Ansprüche 1 bis 4, **dadurch gekennzeichnet, dass** die Gesamtdicke der Folie im Bereich von 10 bis 500 $\mu$m liegt.

6. Coextrudierte, biaxial orientierte Polyesterfolie nach einem der Ansprüche 1 bis 5, **dadurch gekennzeichnet, dass** die Standardviskosität des Polyesters der Basisschicht (B) im Bereich von 700 bis 1075 liegt.

7. Verfahren zur Herstellung einer coextrudierten, biaxial orientierten Polyesterfolie nach Anspruch 1, wobei die Rohstoffe der einzelnen Folienschichten in getrennten Extrudern aufgeschmolzen werden, durch eine Flachdüse coextrudiert werden, das so erhaltene Extrudat zur Verfestigung auf einer oder mehreren Walzen als weitgehend amorphe Vorfolie abgezogen und abgeschreckt wird, die Vorfolie anschließend erneut erhitzt und biaxial gesteckt wird, die biaxial orientierte Folie dann thermofixiert und die Folie schließlich zu einer Rolle aufgewickelt wird, **dadurch gekennzeichnet, dass**

   - die Basisschicht (B) der Folie aus einem Polyester aufgebaut ist, der zu mindestens 80 Mol-% aus Ethylenterephthalatkomponenten besteht (wobei die Gesamtmenge aller Esterkomponenten der Basisschicht (B) 100 Mol-% beträgt), und
   - mindestens eine Deckschicht (A) der Folie aus einem Polyester aufgebaut ist, dessen

      - Diolkomponente zu mindestens 80 Mol-% auf 1,4-Cyclohexandimethanol (CHDM) basiert (wobei die Gesamtmenge aller Diolkomponenten des Polyesters 100 Mol-% beträgt), und dessen
      - Dicarbonsäurekomponente aus Terephthalsäure und Isophthalsäure besteht, wobei der Isophthalsäuregehalt im Bereich von 20 bis 30 Mol-% liegt (wobei die Gesamtmenge aller Dicarbonsäurekomponenten des Polyesters 100 Mol-% beträgt).

8. Verwendung einer coextrudierten, biaxial orientierten Polyesterfolie nach einem der Ansprüche 1 bis 6 für technische und Verpackungs-Anwendungen.

9. Verwendung einer coextrudierten, biaxial orientierten Polyesterfolie nach einem der Ansprüche 1 bis 6 als Laminierfolie, Trägerfolie oder in Folienlaminaten, insbesondere im Bereich von Kartenanwendungen und in flexiblen elektronischen oder optoelektronischen Anwendungen.

**Claims**

1. Coextruded, biaxially oriented, at least two-layer polyester film, **characterized in that** it has

- a base layer (B) which is composed of a polyester which comprises at least 80 mol% of ethylene terephthalate components (wherein the total amount of all the ester components of the base layer (B) is 100 mol%), and
- at least one outer layer (A) which is composed of a polyester having

- a diol component of at least 80 mol% of 1,4-cyclohexanedimethanol (CHDM) (wherein the total amount of all diol components of the polyester is 100 mol%) and having
- a dicarboxylic acid component consisting of terephthalic acid and isophthalic acid wherein the isophthalic acid content is in the range of 20 to 30 mol% (wherein the total amount of all dicarboxylic acid components of the polyester is 100 mol%).

2. A coextruded, biaxially oriented polyester film according to claim 1, **characterized in that** the base layer (B) is provided on both surfaces with a covering layer (A) (ABA structure).

3. A coextruded, biaxially oriented polyester film according to claim 1 or 2, **characterized in that** the film on the outer layer (A) side opposite the base layer (B) a surface layer (C) (ABC-structure).

4. A coextruded, biaxially oriented polyester film according to one of claims 1 to 3, **characterized in that** the thickness of the outer layer(s) (A) and/or (C) (each) is 0.3 to 10 $\mu$m.

5. A coextruded, biaxially oriented polyester film according to one of claims 1 to 4, **characterized in that** the total thickness of the film is in the range of 10 to 500 $\mu$m.

6. A coextruded, biaxially oriented polyester film according to one of claims 1 to 5, **characterized in that** the standard viscosity of the polyester of the base layer (B) is in the range of 700 to 1075.

7. A process for the preparation of a coextruded, biaxially oriented polyester film according to claim 1, wherein the raw materials of the individual film layers are melted in separate extruders are coextruded through a flat-film die, the resultant extrudate for solidification on one or more rollers is withdrawn as a substantially amorphous prefilm, and quenched, the prefilm is then reheated and biaxially inserted, the biaxially oriented film is heat-set and then the sheet is finally wound into a roll, **characterized in that**

- the base layer (B) of the film is composed of a polyester which comprises at least 80 mol% of ethylene terephthalate components (wherein the total amount of all the ester components of the base layer (B) is 100 mol%), and
- at least one outer layer (A) is composed of a polyester

- having a diol component of at least 80 mol% of 1,4-cyclohexanedimethanol (CHDM) (wherein the total amount of all diol components of the polyester is 100 mol%)
- and having a dicarboxylic acid component consisting of terephthalic acid and isophthalic acid wherein the isophthalic acid content is in the range of 20 to 30 mol% (wherein the total amount of all dicarboxylic acid components of the polyester is 100 mol%).

8. Use of a coextruded, biaxially oriented polyester film according to one of claims 1 to 6 for technical and packaging applications.

9. Use of a coextruded, biaxially oriented polyester film according to one of claims 1 to 6 as laminating film, carrier film or foil laminates, particularly in the field of card applications and in , flexible electronic or optoelectronic applications.

**Revendications**

1. Film de polyester co-extrudé orienté biaxialement comportant au moins deux couches, **caractérisé en ce qu'**il présente

- une couche de base (B) composée d'un polyester constitué d'au moins 80% en moles de composants ethylènetéréphtalate (la quantité totale de tous les composants de type ester de la couche de base (B) est de 100% en moles), et
- au moins une couche de recouvrement (A) constituée de polyester, dont

    - des composants diol basés sur au moins 80% en moles de 1,4-cyclohexanediméthanol (CHDM) (la quantité totale de tous les composants diol du polyester est de 100% en moles), et dont
    - des composants acide dicarboxylique comprenant de l'acide téréphatlique et de l'acide isophtalique, où la teneur en acide isophtalique est de 20 à 30% en moles (la quantité totale de tous les composants acide dicarboxylique du polyester est de 100% en moles).

2. Film de polyester co-extrudé orienté biaxialement selon la revendication 1, **caractérisé en ce que** la couche de base (B) est pourvue sur ses deux faces d'une couche de recouvrement (A) (structure ABA).

3. Film de polyester co-extrudé orienté biaxialement selon la revendication 1 ou 2, **caractérisé en ce que** le film forme une couche de surface (C) sur le côté de la couche de base (B) opposé à celui où se trouve la couche de recouvrement (A) (structure ABC).

4. Film de polyester co-extrudé orienté biaxialement selon l'une quelconque des revendications 1 à 3, **caractérisé en ce que** l'épaisseur des couches de recouvrement (A) et/ou (C) est de 0,3 à 10 micromètres (chacune).

5. Film de polyester co-extrudé orienté biaxialement selon l'une quelconque des revendications 1 à 4, **caractérisé en ce que** l'épaisseur totale du film se trouve dans la gamme allant de 10 à 500 micromètres.

6. Film de polyester co-extrudé orienté biaxialement selon l'une quelconque des revendications 1 à 5, **caractérisé en ce que** la viscosité standard du polyester de la couche de base (B) se trouve dans la gamme allant de 700 à 1075.

7. Procédé pour la préparation d'un film de polyester co-extrudé orienté biaxialement selon la revendication 1, dans lequel les matières premières de couches de film individuelles sont fondues dans des extrudeuses séparées et sont co-extrudées à travers une filière plate, l'extrudat résultant de la solidification sur un ou plusieurs rouleaux est retiré en tant que pré-film sensiblement amorphe, et désactivé, le pré-film est ensuite réchauffé et biaxialement inséré, le film orienté biaxialement est thermofixé et ensuite la pellicule est enfin enroulée en un rouleau, **caractérisé en ce que** :

    - la couche de base (B) du film est composée d'un polyester constitué d'au moins 80% en moles de composants ethylènetéréphtalate (la quantité totale de tous les composants de type ester de la couche de base (B) est de 100% en moles), et
    - au moins une couche de recouvrement (A) est constituée de polyester, dont

        - des composants diol basés sur au moins 80% en moles de 1,4-cyclohexanediméthanol (CHDM) (la quantité totale de tous les composants diol du polyester est de 100% en moles), et dont
        - des composants acide dicarboxylique comprenant de l'acide téréphatlique et de l'acide isophtalique, où la teneur en acide isophtalique est de 20 à 30% en moles (la quantité totale de tous les composants acide dicarboxylique du polyester est de 100% en moles).

8. Utilisation d'un film de polyester co-extrudé orienté biaxialement selon l'une quelconque des revendications 1 à 6 pour des applications techniques et d'emballage.

9. Utilisation d'un film de polyester co-extrudé orienté biaxialement selon l'une quelconque des revendications 1 à 6 comme feuille de laminage, film de support ou film stratifié, en particulier dans la zone des applications de la carte et dans des applications électroniques ou optoélectroniques flexibles.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 4323348 B
- JP 442120 B
- JP 54062277 A
- US 6020056 A
- US 20090011228 A
- JP 2001062960 A
- JP 2008142960 A
- DE 60208913 T2

**In der Beschreibung aufgeführte Nicht-Patentliteratur**

- Encyclopedia of Polymer Science and Engineering. 1988, vol. 12, 193-216
- PET Packaging Technology. Academic Press, 2002, 116-157
- **J.-M. BESNOIN ; K.Y. CHOI.** *Rev. Macromol. Chem.Phys.,* 1989, vol. C29 (1), 67-68
- **D. BRIGGS.** Analysis of polymer surfaces by SIMS VI. Detection of cyclic oligomer on the surface of poly(ethylene terephthalate) film. *Surface and Interface Analysis,* 1986, vol. 8, 133-136
- **H. ZEITLER FÜHRT.** *Melliand Textilber,* Februar 1985, 132-138
- **S. REICHLMAIER et al.** *J. Vac. Sci. Technol.,* Mai 1995, vol. A13 (3), 1217-1223
- Encyclopedia of Polymer Science and Engineering. 1988, vol. 12, 193-216
- PET Packaging Technology. Academic Press, 2002, 116-157
- Analysis of Polymer Surfaces by SIMS, 6-Detection of Cyclic Oligomer on the surface of Poly(ethylene-terephthalate) Film. *Surface and Interface Analysis,* 1986, vol. 8, 133-136